# EUROPEAN PATENT APPLICATION

(11) **EP 1 613 056 A2**
(43) Date of publication of application: **04.01.2006**
(21) Application number: 04256671.1
(22) Date of filing: 28.10.2004
(51) Int. Cl.: H04N 3/15

(54) **Cmos image sensor, reset transistor control circuit and voltage switch circuit**

(30) Priority: 30.06.2004 JP 2004194271
(71) Applicant: FUJITSU LIMITED, Kawasaki-shi, Kanagawa 211-8588 (JP)
(72) Inventor: Yanagisawa, Makoto, c/o Fujitsu Limited, Kawasaki-shi Kanagawa 211-8588 (JP); Mizuguchi, Toshitaka, c/o Fujitsu Limited, Kawasaki-shi Kanagawa 211-8588 (JP); Inoue, Tadao, c/o Fujitsu Limited, Kawasaki-shi Kanagawa 211-8588 (JP)
(74) Representative: Wilding, Frances Ward

(57) **Abstract**

The present invention can be applied to a CMOS image sensor (2) in which each pixel circuit of an active pixel sensor array includes a photoelectric conversion element (D11) for converting input light into electricity and a switch transistor for controlling the supply of a reset voltage for resetting the photoelectric conversion element (D11) to a predetermined voltage, to the photoelectric conversion element (D11). The CMOS image sensor (2) comprises a control circuit (21b) for assigning a control signal applied to a control electrode of the switch transistor. The control circuit (21b) outputs a first voltage much higher than a supply voltage of the CMOS image sensor (2) so as to make an ON resistance of the switch transistor sufficiently small in the first part of a reset period of the photoelectric conversion element (D11) and outputs a second voltage lower than a supply voltage of the CMOS image sensor (2) in the latter part of a reset period of the photoelectric conversion element (D11).

## Description

The present invention generally relates to a CMOS image sensor. More specifically, it relates to a voltage control circuit generating a control voltage of a switch element for controlling the supply of a reset voltage to the photoelectric conversion element of each pixel circuit included in the CMOS image sensor and a voltage switch circuit used in this voltage control circuit.

The CMOS (Complementary metal-oxide semiconductor) image sensor comprises a pixel part in which pixel circuits for taking an image for one pixel are arranged in a matrix form and outputs image signals for one page by sequentially selecting outputs of the respective pixel circuits using vertical and horizontal scanning shift registers. In each pixel circuit, after a photoelectric conversion element such as a photo diode, etc. is shortened at a predetermined reset voltage each time an image is taken, a charging voltage of the photoelectric conversion element drops in accordance with an exposure amount by opening the short-circuit to a reset voltage. Therefore, an image can be taken by obtaining the drop amount of the charging voltage of each pixel. At this time, as publicly known, a CMOS switch element for controlling the short of a reset voltage for a photoelectric conversion element is either ON or is set to a conduction state. Then, kTC noise which is obtained using an equation (kT/C) is generated at a timing when a node of the photoelectric conversion element is opened from the short condition to a predetermined reset voltage. Here, k is a Boltzman constant, T is an absolute temperature and C is the full capacity of photoelectric conversion elements.
The applicant discloses a CMOS image sensor capable of reducing kTC noise, considering the above-mentioned point (Japanese laid-open patent publication 2003-234959, which is called patent literature 1 hereafter.) . In this CMOS image sensor, in a pixel circuit, an ON resistance when the CMOS switch element is ON or a conduction resistance is appropriately increased by controlling a gate potential of the CMOS switch element during a reset period of the photoelectric conversion. Thus, the cutoff frequency of a low-pass filter which consists of the ON resistance of a CMOS switch element and the parasitic capacitance generated at a cathode of the photoelectric conversion element is lowered. Therefore, the kTC noise component equal to or higher than the cutoff frequency can be reduced.

However, anON resistance of the CMOS switch element is a finite value while this element is being shorted up to a reset level. Therefore, a voltage at the time of resetting a photoelectric conversion element such as a photo diode, etc., is slightly deviated from the assigned predetermined reset voltage. The reset noise generated by the deviation in the elements is added to the kTC noise. Therefore, picture quality can be improved by reducing the reset noise generated by the deviation from such a reset voltage and the kTC noise.

Accordingly, it is desirable to provide a CMOS image sensor for reducing kTC noise and reset noise generated by the deviation from a reset voltage.

It is also desirable to provide a voltage control circuit for assigning a control voltage to reduce kTC noise and reset noise generated by the deviation from a reset voltage for a CMOS switch element for controlling the supply of a reset voltage to the photoelectric conversion element of a pixel circuit in a CMOS image sensor and a voltage switch circuit for realizing this voltage control circuit.

According to an embodiment of one aspect of the present invention, there is provided a CMOS image sensor in which each pixel circuit of an active pixel sensor array includes a photoelectric conversion element for converting input light into electricity and a switch transistor for controlling the supply of a reset voltage for resetting the photoelectric conversion element to a predetermined voltage, to the photoelectric conversion element. The CMOS image sensor also comprises a control circuit for assigning a control signal applied to a control electrode of the switch transistor. In the first part of a reset period of the photoelectric conversion element, the control circuit outputs a first voltage so as to make an ON resistance of the switch transistor sufficiently smaller than an electric source voltage of the CMOS image sensor.

According to an embodiment of another aspect of the present invention, there is provided a control circuit for assigning a control signal applied to the control electrode of a switch transistor in a CMOS image sensor in which each pixel circuit of an active pixel sensor array includes a photoelectric conversion element for converting input light into electricity and a reset transistor for controlling the supply of a reset voltage for resetting the photoelectric conversion element to a predetermined voltage, to the photoelectric conversion element. This control circuit comprises a first conductor for receiving a first voltage much higher than an electric source voltage of the CMOS image sensor and a low voltage generation circuit for generating a second voltage lower than an electric source of the CMOS image sensor. Furthermore, this control circuit comprises a switch circuit for outputting a first voltage to make an ON resistance sufficiently small in the first part of a reset period of the photoelectric conversion element and for outputting a second voltage in the latter part of a reset period of the photoelectric conversion element.

In an embodiment of yet another aspect of the present invention, there is provided a voltage switch circuit that is inserted between a first conductor for receiving a relatively high voltage and a second conductor for receiving a relatively low second voltage and that outputs either the first voltage or the secondvoltage. This voltage switch circuit comprises a unit for preventing a drop in voltage of the first voltage from occurring in the second conductor in the case where the first voltage is switched to the second voltage.

According to an embodiment of the present invention, in the first part of a reset period, a photoelectric conversion element is securely reset by sufficiently reducing the ON resistance of a reset transistor or a switch transistor for controlling the supply of a reset voltage of the photoelectric conversion element so that the photoelectric conversion element is securely reset. Consequently, reset noise generated by the deviation from a reset voltage can be reduced. In the latter part of a reset period, by increasing an ON resistance of the CMOS switch element, the cutoff frequency of a low-pass filter that is generated by an ON resistance of both the CMOS image sensor and the parasitic capacitance generated at a cathode of the photoelectric conversion element is lowered. Therefore, the kTC noise component corresponding to a frequency which is equal to or higher than the cutoff frequency can be reduced.

Reference will now be made, by way of example, to the accompanying drawings, in which:
Fig 1A is a block diagram showing the whole configuration of a general CMOS image sensor;
Fig. 1B is a circuit diagram showing one example of a pixel circuit included in a CMOS image sensor;
Fig. 1C is a waveform chart showing an example of a gate voltage of the switch transistor for reset;
Fig. 2A is a circuit diagram showing an example of a gate voltage of the switch transistor for reset according to a previously-proposed technology;
Fig. 2B is a waveform chart for explaining operations of the voltage control circuit of Fig. 2A;
Fig. 3A is a block diagram showing the whole configuration of a CMOS image sensor according to a preferred embodiment of the present invention;
Fig. 3B is a circuit diagram showing one example of a voltage control circuit of CMOS image sensor; and
Fig. 4 is a timing chart for explaining operations of a pixel circuit and a voltage control circuit of the CMOS image sensor of Fig. 3A.

The following is a detailed explanation of the present invention in reference to the preferred embodiments and attached drawings. In these drawings, like reference numerals refer to the like elements.

### [First preferred embodiment]

Before the explanation of a CMOS image sensor of the present invention, the CMOS image sensor described in the patent literature 1 is explained at first.

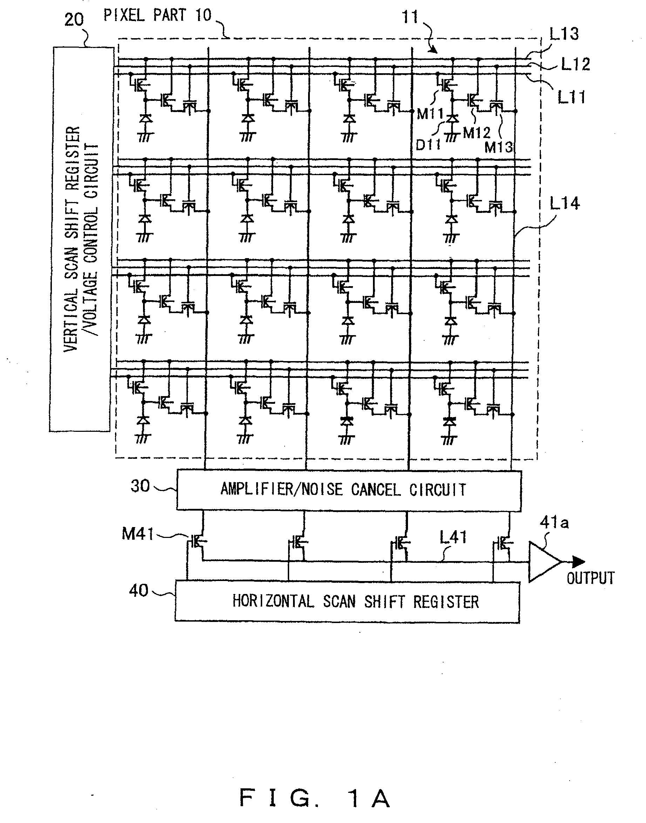

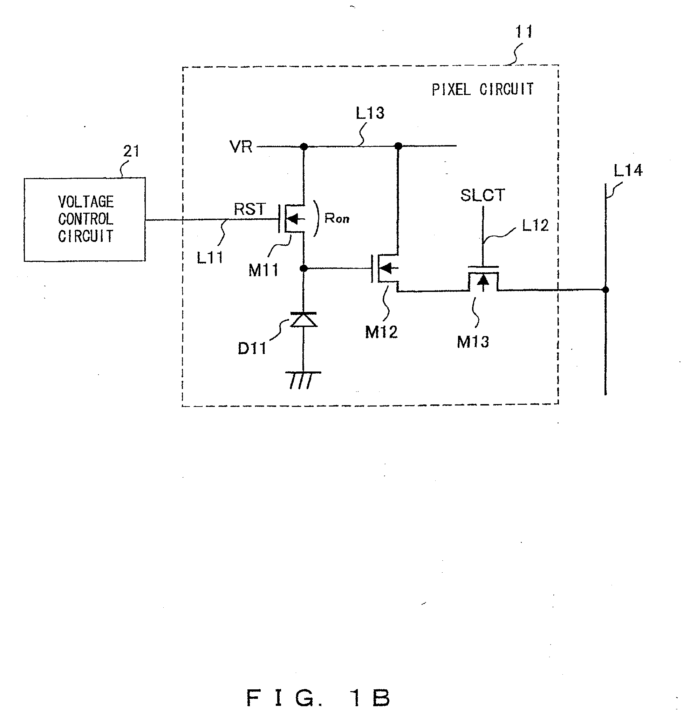

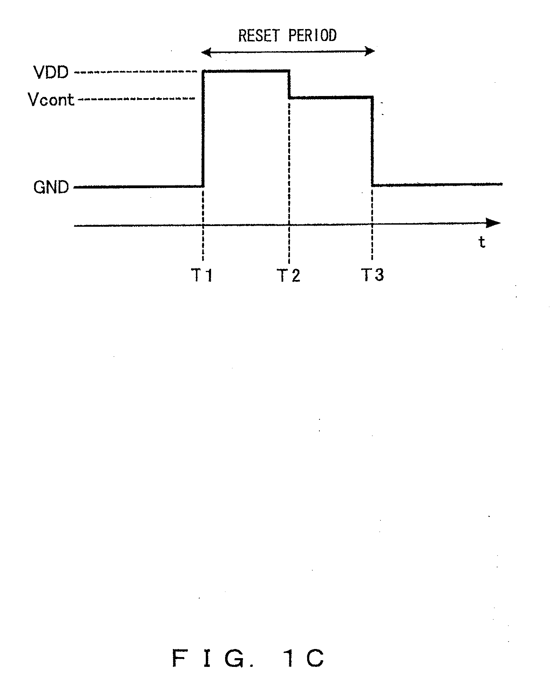

Fig. 1 explains the outline of a CMOS image sensor of the patent literature 1. Fig. 1A is the overall view of a CMOS image sensor 1. Fig. 1B is a circuit diagram showing a pixel circuit 11 and a voltage control circuit 21 for supplying the control voltage (that is, a gate voltage) RST of a CMOS switch element M11 of this pixel circuit 11. Fig. 1C is a waveform chart showing a waveform of the control voltage RST.

In Fig. 1A, a CMOS image sensor comprises the pixel parts 10 that are arranged in a matrix form.

As shown in Fig. 1B, eachpixel circuit 11 comprises a photoelectric conversion element D11 such as a photo diode or a photo gate, and a switch transistor for reset M11, a transistor for amplification M12 and a column selection transistor M13 which are respectively formed by, for example, N-channel MOSFETs (MOS Field-Effect Transistors) . The voltage control circuit 21 is connected to a gate electrode of the switch transistor M11. The anode side of the photoelectric conversion element D11 is grounded. The cathode side is connected to a source electrode of the switch transistor M11 and a gate electrode of the transistor for amplification M12. In addition, a drain electrode of the switch transistor M11 and a drain electrode of the transistor for amplification M12 are connected to an electric source supply line L13 to which a reset voltage VR is supplied. A source electrode of the transistor for amplification M12 is connected to a drain electrode of the column selection transistor M13. A gate electrode of the column selection transistor M13 is connected to a column selection signal line L12 to which a column selection signal SLCT for selecting the pixel circuit 11 in the row direction is supplied. In addition, a source electrode of the column selection transistor M13 is connected to a row selection signal line L14 for selecting the pixel circuit 11 in a row direction.

Furthermore, the CMOS image sensor comprises a vertical scan shift register/voltage control circuit 20 for implementing the designation of the pixel circuit 11 in a vertical direction or the voltage control of a reset signal, an amplifier/noise cancel circuit 30 for implementing the amplification and noise-reduction of image signals outputted from the pixel circuit 11 in each row and a horizontal scan shift register 40 for designating outputs from the pixel circuit 11 in a horizontal direction using a row selection transistor M41. In addition, an amplifier 41a is connected to an output bus L41 for receiving an output signal from each row selection transistor M41. In Fig. 1A, the amplifier/noise cancel circuit 30 is shown as one function block but actually one circuit is arranged for each row in which the pixel circuit 11 is arranged. Furthermore, Fig. 1A shows a condition such that four-column-four-row pixel circuits 11 are arranged in the pixel part 10 but it goes without saying that more pixel circuits 11 are actually arranged. For the convenience of explanation, the voltage control circuit 21 is shown together with the pixel circuit 11 in Fig. 1B but actually the voltage control circuit 21 is provided for each column in the vertical scan shift register/voltage control circuit 20.

At first, the basic operation of the pixel circuit 11 is explained. Firstly, a reset signal RST is supplied from the voltage control circuit 21 via a reset signal line L11. When the switch transistor M11 becomes ON at a predetermined timing, the photoelectric conversion element D11 is charged at a reset potential VR as an initial voltage. Then, when the reset signal RTS is made OFF, an electric charge is accumulated in the photoelectric conversion element D11 in accordance with the externally inputted incident radiation. Accordingly, the potential on a cathode side of the photoelectric conversion element D11 drops. At that time, the transistor for amplification M12 functions as a source follower amplifier. That is, this transistor amplifies an electric current to increase a drive capability at the subsequent stage and at the same time, it outputs a voltage lower than the potential on a cathode side of the photoelectric conversion element D11 by about the threshold value of the MOS-FET.

In this way, when the accumulation of a signal electric charge starts and the column selection signal SLCT is inputted into a gate electrode of the column selection transistor M13 from a column selection signal line L12 after a predetermined time elapses, an output voltage of the transistor for amplification M12 is outputted to a row selection signal line L14 as an image signal. Then, the reset signal RST turns the switch transistor M11 ON and the signal electric charge accumulated on the photoelectric conversion element D11 is reset.

In the thus-configured pixel circuit 11, kTC noise is generated by inputting the reset signal RST and a signal voltage depending on the accumulated electric charge in the photoelectric conversion element D11 is overlapped with a component of the above-mentioned kTC noise.

As shown in Fig. 1C, for the reduction of this kTC noise, the CMOS image sensor of Fig. 1 supplies the reset signal RST to a gate electrode of the switch transistor M11 from the voltage control circuit 21. During a period between a time T1 and a time T3, the reset signal RST sufficiently retains the switch transistor M11 in an ON condition. Accordingly, this period becomes a reset period for resetting the accumulated electric charges in the photoelectric conversion element D11. Actually, a voltage control of the reset signal is implemented by dividing this reset period into two. At the timing of T1, the voltage control circuit 21 sets the output voltage to an electric voltage VDD. Thus, the switch transistor M11 turns to ON. At this time, by reducing an ON resistance of the switch transistor M11 as much as possible using the electric source voltage VDD, the accumulated electric charges in the photoelectric conversion element D11 are securely reset. Then, at the timing of T2 after a predetermined time elapses, the voltage control circuit 21 outputs a control voltage Vcont for controlling a cutoff frequency of the above-mentioned low-pass filter. This control voltage Vcont is set to equal to or higher than a threshold voltage possessed by the switch transistor M11 and the control voltage Vcont is generally lower than the electric source voltage VDD as shown in Fig. 1C. In this way, an ON resistance of the switch transistor M11 is increased by dropping a gate potential of the switch transistor M11 so that a cutoff frequency of the low-pass filter lowers. Therefore, a kTC noise component is reduced by the lowering amount of the cutoff frequency.

However, since an ON resistance of the switch transistor M11 is a finite value, a voltage obtained at the time of resetting the photoelectric conversion element D11 is slightly deviated from a predetermined reset voltage VR so that reset noise generated by the variation in elements is added. Therefore, it is preferable that a resistance obtainedwhen the transistor M11 is ON (Ron in Fig. 1B) is as small as possible.

As a method of decreasing the ON resistance Ron of the transistor M11, there is a method of changing the characteristic of the transistor M11 itself so as to decrease the ON resistance Ron without changing circuit conditions. However, the change of the characteristic causes the increase of the mounting area of the transistor M11. Accordingly, the pixel size increases and it makes difficult to get higher resolution.

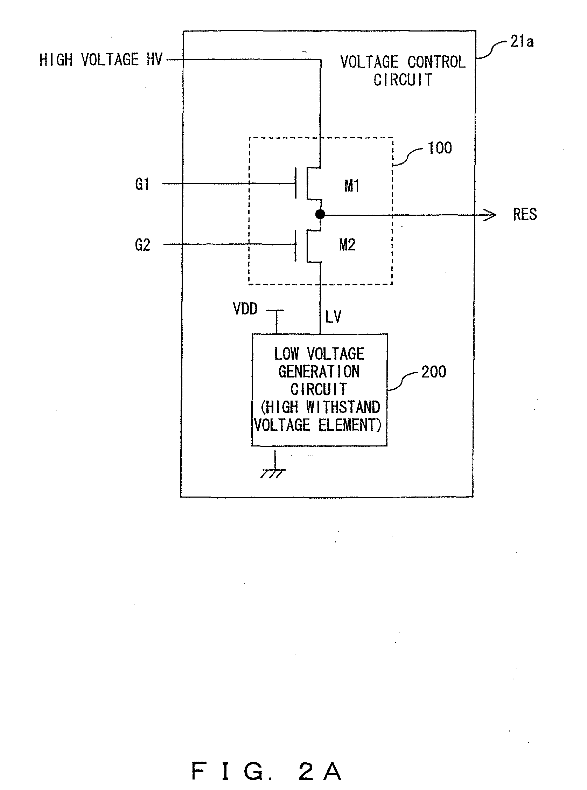

As another method of decreasing an ON resistance Ron of the transistor M11, there is amethodof increasing a gate voltage of the switch transistor M11 without changing the characteristic of the transistor M11. For example, Fig.2A shows one example of a voltage control circuit 21a for outputting a voltage (for example, 7V) higher than the VDD as the RES signal during a reset period. In Fig.2A, a voltage control circuit 21a comprises a switch circuit 100 for outputting either one of the two input voltages and a low voltage generation circuit 200 that generates a low voltage LV and is connected to one of the inputs of the switch circuit 100. To the other input of the switch circuit 100, a constant high voltage HV (for example, 7V) is applied. The low voltage generation circuit 200 is configured to output a predetermined low voltage (for example, 1.8V) only during a reset period between T1 and T3 and output 0V except for that period. The switch circuit 100 serially comprises CMOS transistors for switch M1 and M2. To the gate electrodes of a set of the serially connected transistors M1 and M2, control signals G1 and G2 are connected respectively.

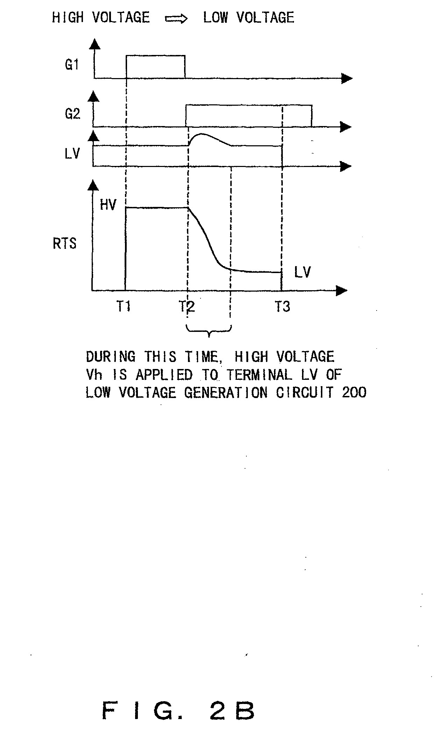

Fig. 2B is a timing chart showing a signal waveform to explain the operations of the voltage control circuit 21a of Fig. 2A. Before the reset period, that is, before the time T1, the control signals G1 and G2 are both logic 0. At the start time T1 of reset, the control signal G1 is logic 1 so that a high voltage HV is outputted as the output RST of the voltage control circuit 21a. At the time T2, the signal G1 is logic 0 and the signal G2 is logic 1 so that the transistor M1 is OFF while the transistor M2 is ON. On and after T2, however, the high voltage HV occurs in connection node of M1 and M2 via the transistor M1. Therefore, the high voltage HV is applied to a terminal LV of the low voltage generation circuit 200 until the high voltage HV reaches up to the output level LV of the low voltage generation circuit 200. In the case where this method is implemented, it is necessary to make a circuit element of the low voltage generation circuit 200 also possess a strength that can withstand the high voltage HV. Accordingly, if a high voltage element is used for the low voltage generation circuit 100, a layout area generally increases and a chip area increases also, which leads to a problem of a cost increase. Meanwhile, the control signal G2 is configured to be logic 0 after the signal checks that the output LV of the low voltage generation circuit 200 becomes 0V.

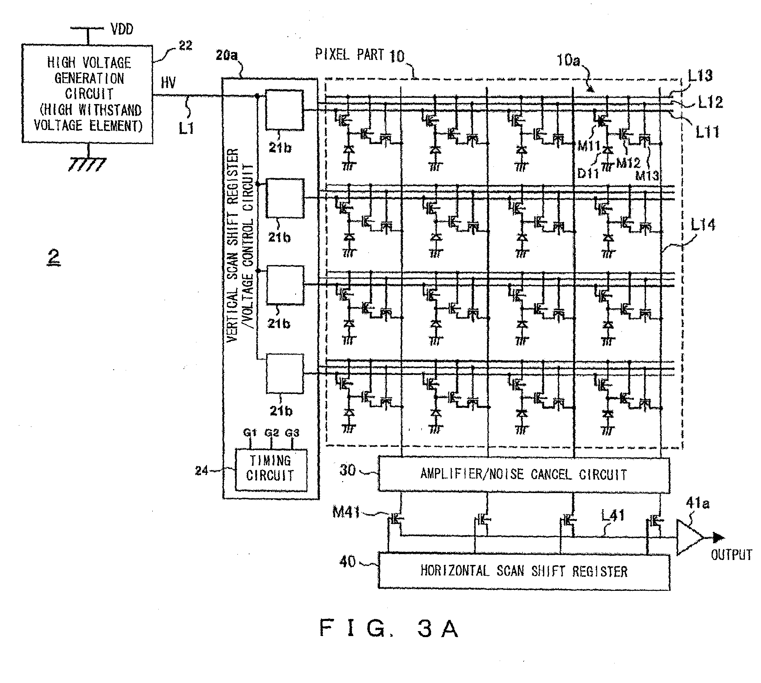

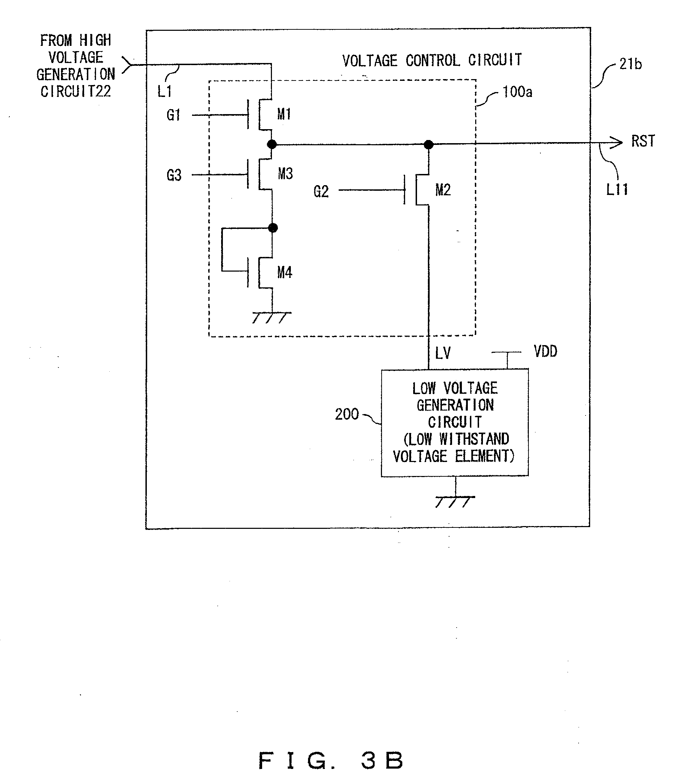

The present invention is invented to solve this problem. Fig. 3 shows the configuration of a CMOS image sensor embodying the present invention. Fig. 3A is an overall view of a CMOS image sensor 2 embodying the present invention. Fig. 3B is a circuit diagram showing the configuration of a voltage control circuit 21b provided for each column in a vertical scan shift register/voltage control circuit 20a. The CMOS image sensor 2 of Fig. 3A is identical to the CMOS image sensor 1 of Fig. 1A except for points such that the vertical scan shift register/voltage control circuit 20 is replaced by 20a and a high voltage generation circuit 22 for generating the constant high voltage HV is added. The difference between the vertical scan shift register/voltage control circuit 20 and 20a resides in points such that the voltage control circuit 21 is replaced by 21b and a timing circuit 24 is explicitly shown. The output HV of the high voltage generation circuit 22 is supplied to each voltage control circuit via a conductor L1. A timing circuit 24 is a circuit for generating the control signals G1, G2 and G3, which is described later.

A voltage control circuit 21b of Fig. 3B is identical to the voltage control circuit 21a of Fig. 2A except for a point such that a voltage switch circuit 100 is replaced by 100a. Therefore, the following is the explanation of the switch circuit 100a. The switch circuit 100a of Fig.3A is obtained by inserting a unit for serially connecting a switch transistor M3 and a diode-connection transistor M4 between the connection node of a set of transistors M1 and M2 of the switch circuit of Fig. 2A and the ground. A gate of the switch transistor M3 is controlled by the control signal G3.

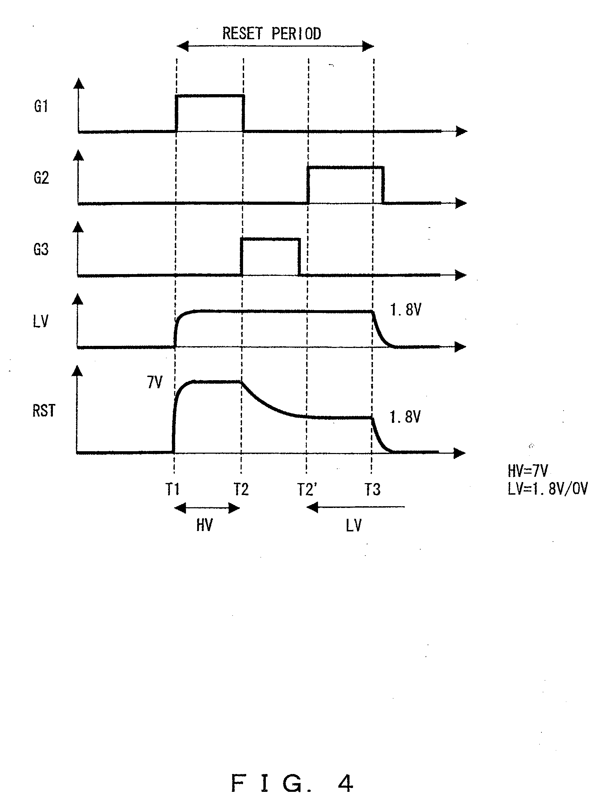

Fig. 4 is a timing chart showing the signal waveform of each part of the voltage control circuit 21b of Fig. 3, in order to explain the operations. In Fig. 4, a period between T1 to T3 is a reset period. Only in the first part of a reset period between T1 and T2, the control signal G1 is set to logic 1, which is identical to the case of the CMOS image sensor of Fig. 2. T2' is set after the time when an output HV of the high voltage generation circuit 22 completely drops. A series circuit of the transistors M3 and M4 that is newly added fulfils a role of grounding a connection node (that is, output RST) during the drop period of a voltage HV on and after the Time T2. Therefore, the control signal G3 is logic 1 only during the period between T2 and the drop termination of the voltage HV (that is, slightly before T2'). Then, the control signal G2 becomes logic 1 after T2' when the output HV of the high voltage generation circuit 22 completely drops. Accordingly, the output voltage LV of the low voltage generation circuit 200 is outputted as an output RST of the voltage control circuit 21b via the transistorM2. As mentioned above, the output voltage LV of the low voltage generation circuit 200 changes from a voltage (for example, 1.8V) lower than VDD (about 2.5V to 3V, in the case of a CMOS circuit) to 0V at T3. After the low voltage LV changes from 1.8V to 0V, G2 changes from logic 1 to logic 0.

In this way, in the CMOS image sensor 2 embodying the present invention, the transistor M2 is ON after the high voltage HV (7V in this example) completely drops so that the voltage of the connection node of the transistors M1 andM2 is not applied to the low voltage generation circuit 200 during a drop period of the high voltage HV. Therefore, the output HV of the high voltage generation circuit 22 can be set sufficiently high so as to sufficiently decrease an ON resistance Ron of the switch transistor M1. Thus, according to an embodiment of the present invention, in the first part of a reset period, reset noise can be reduced by sufficiently decreasing an ON resistance of the switch transistor M11 for controlling the supply of a reset voltage of the photoelectric conversion element D11 and by securely resetting the photoelectric conversion element D11.

In addition, in the latter part of a reset period between T2 and T3, a kTC noise component in respect of a frequency higher than the set cutoff frequency can be reduced by increasing an ON resistance Ron of the CMOS switch M11 and by lowering the set cutoff frequency of a low-pass filter generated by both the ON resistance Ron of the CMOS switch element M11 and parasitic capacitance generated at a cathode of the photoelectric conversion element D11.

The voltage switch circuit 100 is not limited to the above-mentioned use example and it can be used for a variety in uses as a circuit for outputting a voltage of either a high voltage generation circuit or a low voltage generation circuit.

The above-mentioned explanation only refers to preferred embodiments in order to explain the present invention. Therefore, a person skilled in the art can easily make various changes or modifications according to the technical concepts or principles of the present invention.

For example, a pixel circuit is not limited to Fig. 1B and the principle of the present invention can be applied to a pixel circuit as long as a pixel circuit is provided with a photoelectric conversion element and a switch transistor for controlling the supply of a reset voltage to the photoelectric conversion element.

In the above-mentioned example, 7V is used as a high voltage HV for a reset voltage. The high voltage is not limited to 7V and an appropriate high voltage can be used. Similarly, the output LV of the low voltage generation circuit is set to 1.8V and 0V in the preferred embodiment but an appropriate voltage can be used other than these voltages.

In the above-mentioned preferred embodiment, the voltage control circuit 21b is provided with a series circuit of transistors M3 andM4 as a circuit for grounding the connection node of the transistors M1 and M2 but operations can be implemented without this series circuit. Without this ground series circuit (M3+M4), the aim of the present invention can be sufficiently achieved by turning the control voltage G2 of the switch transistor M2 of the low voltage generation circuit 200 to logic 1 at the timing T2' when the high voltage HV completely drops as shown in Fig. 4. It is thought that the value of the high voltage HV cannot be that high in comparison with the case where the ground series circuit (M3+M4) is provided.

Furthermore, instead of M4, another low voltage generation circuit can be used.

Meanwhile, the order of M3 and M4 can be reversed.

## Claims

1. A CMOS image sensor (2), in which
each pixel circuit (11) of an active pixel sensor array comprises a photoelectric conversion element (D11) for converting input light into electricity and a switch transistor for controlling supply of a reset voltage for resetting the photoelectric conversion element (D11) to a predetermined voltage, to the photoelectric conversion element (D11), comprising
a control circuit (21b) for assigning a control signal applied to a control electrode of the switch transistor, wherein
the control circuit (21b) outputs a first high voltage so as to make an ON resistance of the switch transistor sufficiently smaller than a power source voltage of the CMOS image sensor (2), in a first part of a reset period of the photoelectric conversion element (D11).

2. The CMOS image sensor (2) according to claim 1, wherein the control circuit comprises:
a first conductor receiving the first voltage;
an output conductor for outputting the control signal;
a low-voltage generation circuit (200) for generating a second voltage; and
a switch circuit (100) for switching from the first voltage to the second voltage, a voltage to be outputted as the control signal from the output conductor.

3. The CMOS image sensor (2) according to claim 2, wherein the switch circuit (100) further comprises a unit for preventing a drop voltage immediately after termination of the first voltage from adding to the low voltage generation circuit.

4. The CMOS image sensor (2) according to claim 3, wherein the switch circuit (100) comprises:
a first switch unit (M1) which is inserted between the first conductor and the output conductor and is ON only during an output period of the first voltage; and
a second switch unit (M2) which is inserted between the output conductor and the low voltage generation circuit (200) and is ON after the drop of a voltage but is OFF on and before the drop of a voltage.

5. The CMOS image sensor (2) according to claim 4, wherein:
the low voltage generation circuit (200) outputs the second voltage at least during an output period of the second voltage and outputs 0V upon termination of the reset period; and
the second switch unit (M2) switches from ON to OFF after an output of the low voltage generation circuit (200) becomes 0V.

6. The CMOS image sensor (2) according to claim 4 or 5, wherein the switch circuit (100) further comprises a third switch unit which is inserted between the output conductor and ground and is ON only during a period immediately after termination of the first voltage until nearly termination of the drop of a voltage.

7. The CMOS image sensor (2) according to claim 6, wherein the third switch unit serially comprises:
a first transistor (M3) operated by a control signal which is externally assigned; and
a diode-connected second transistor (M4).

8. The CMOS image sensor (2) according to any preceding clai wherein the first voltage is higher than twice an electric source voltage of the CMOS image sensor (2).

9. The CMOS image sensor (2) according to any one of claims 2 to 8, wherein the second voltage is approximately 1.8V.

10. A control circuit (21b) of CMOS image sensor (2) in which each pixel circuit of an active pixel sensor array comprises a photoelectric conversion element (D11) for converting input light into electricity and a reset transistor for controlling supply of a reset voltage for resetting the photoelectric conversion element to a predetermined voltage, to the photoelectric conversion element (D11), for assigning a control signal to be applied to a control electrode of the reset transistor, comprising:
a first conductor for receiving a first voltage much higher than an electric source voltage of the CMOS image sensor (2);
a low voltage generation circuit (200) for generating a second voltage lower than an electric source voltage of the CMOS image sensor (2); and
a switch circuit (100) for outputting the first voltage in a first part of a reset period of the photoelectric conversion element (D11) and outputting the second voltage in a latter part of a reset period of the photoelectric conversion element (D11).

11. A voltage switch circuit (100) inserted between a first conductor for receiving a relatively high voltage and a second conductor for receiving a relatively low second voltage, for outputting either the first voltage or the second voltages, comprising
a unit for preventing a drop voltage of the first voltage from occurring in the second conductor in a case of switching the output from the first voltage to the second voltage.

12. The voltage switch circuit (100) according to claim 11, comprising:
an output conductor for outputting either one of the two voltages;
a first switch unit (M1) which is inserted between the first conductor and the output conductor and is ON only during an output period of the first voltage; and
a second switch unit (M2) which is insertedbetween the output conductor and the second conductor and is ON after the drop of a voltage but is OFF on and before the drop of a voltage.

13. The voltage switch circuit (100) according to claim 12, further comprising
a third switch unit which is inserted between the output conductor and ground and is ON only during a period immediately after termination of the first voltage until nearly the termination of the drop of a voltage.

14. The voltage switch circuit according to claim 13, wherein the third switch unit serially comprises:
a first transistor operated by a control signal that is externally assigned; and
a diode-connected second transistor.
